# EUROPEAN PATENT SPECIFICATION

(11) **EP 2 999 984 B1**
(45) Date of publication and mention of the grant of the patent: **07.04.2021**
(21) Application number: 14730347.3
(22) Date of filing: 14.05.2014
(51) Int. Cl.: G02B 6/44

(54) **OPTICAL CABLE SPLICE CASSETTES WITH SLACK COVERS**
SPLEISSKASSETTEN FÜR OPTISCHE KABEL MIT SCHLAFEN ABDECKUNGEN
CASSETTES D'ÉPISSURE POUR CÂBLES OPTIQUES AVEC COUVERCLES DE MOU

(30) Priority: 21.05.2013 US 201361825764 P
(43) Date of publication of application: 30.03.2016
(73) Proprietor: Corning Optical Communications LLC, Charlotte, NC 28216 (US)
(72) Inventor: GIRAUD, William, Julius, McPhil, Azle, Texas 76020 (US); RODRIGUEZ, Diana, Fort Worth, Texas 76137 (US)
(74) Representative: Sturm, Christoph
(86) International application number: PCT/US2014/037959
(87) International publication number: WO 2014/189731

(56) References cited:
- EP-A1- 2 383 596
- WO-A1-02/082152
- WO-A1-03/098306
- WO-A1-03/098306
- WO-A2-01/67151
- WO-A2-2011/107181
- US-A1- 2009 324 189
- US-B1- 6 496 638

## Description

### RELATED APPLICATIONS

This application claims the benefit of priority under 35 U.S.C. § 119 of U. S. Provisional Application No. 61/825,764 filed on May 21, 2013.

### BACKGROUND

### Field of the Disclosure

The disclosure relates generally to optical cable apparatus and more particularly to splice cassettes that may be used in network equipment including optical cables.

### Technical Background

In optical cable networking apparatus including convergence points and distribution frames, such as in fiber-optics networking, there is a constant demand for apparatus permitting high-density distribution with very high fiber termination counts in a small, confined volume. Ongoing needs exist for optical fiber apparatus having features that make installing, establishing maintaining, and repairing network connections more convenient and efficient.

EP 2 383 596 A1 discloses a splice holder for managing and storing splices between optical fibers in fiber optic hardware and equipment showing the features of the generic part of claim 1.

Additional prior art is given by WO 02/082152 A1 and WO 01/67151 A2.

### SUMMARY

The invention provides splice cassettes for optical cables according to claim 1.

The disclosure relates also to splice cassettes for optical cables. The splice cassettes may include a tray base having a tray top surface and a tray bottom surface. The splice cassettes may be loaded with a plurality of optical cables coupled to an adapter panel having a plurality of optical connectors for connecting the plurality of optical cables to at least one external device. At least a portion of the optical cables may be jacketed or bundled together as a slack cable. A tray center portion may be defined on the tray top surface inside a center-portion periphery. A plurality of tray cable retaining members may be arranged around a center-portion periphery. The plurality of tray cable retaining members may guide the optical cables around the center-portion periphery. The tray base may also include a transition passage through which the slack cable may be routed from the tray top surface to the tray bottom surface. A tray-bottom substructure may protrude from the tray bottom surface below the tray center portion of the tray top surface. Thereby, a continuous slack passage may be defined outwardly on the tray-bottom surface from a substructure wall of the tray-bottom substructure, the continuous slack passage comprising a first slack region and a second slack region on opposite sides of the tray-bottom substructure. The slack cable may be routed at least once around the continuous slack passage. A first slack cover may be hingedly attached to a first outer edge of the tray base. The first slack cover may enclose at least a portion of the first slack region in a closed position of the first slack cover. A second slack cover may be hingedly attached to a second outer edge of the tray base. The second slack cover may enclose at least a portion of the second slack region in a closed position of the second slack cover. The splice cassettes may include a slack exit, through which the slack cable passes from the first slack region or the second slack region out of the splice cassette.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary, and are intended to provide an overview or framework to understand the claims.

The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

FIG. 1 is a top perspective view of a splice cassette according to embodiments described herein;
FIG. 2 is a top perspective view of the splice cassette of FIG. 1 illustrating optional features that may be added to the splice cassette in alternative embodiments;
FIG. 3 is a top perspective view of the splice cassette of FIG. 1 showing a closed position of an optional tray cover;
FIG. 4 is a bottom perspective view of a splice cassette having two open slack covers according to embodiments described herein;
FIG. 5 is a bottom perspective view of the splice cassette of FIG. 4 showing closure of both slack covers;
FIG. 6 is a detail view of an open slack cover of the splice cassette of FIG. 4;
FIG. 7 is a detail view of a closed slack cover of the splice cassette of FIG. 5;
FIG. 8 is a detail view of the closed slack cover of FIG. 7;
FIG. 9A is a top view of a slack cover according to some embodiments described herein;
FIG. 9B is a bottom view of the slack cover of FIG. 9A;
FIG. 10A is a detail view of the top of the slack cover of FIG. 9A;
FIG. 10B is a detail view of the bottom of the slack cover of FIG. 9B;
FIG. 11 is a top view of a splice cassette according to embodiments herein, illustrating optical cable routing around a tray top surface; and
FIG. 12 is a bottom view of the splice cassette of FIG. 11, illustrating cable routing around a tray bottom surface.

### DETAILED DESCRIPTION

As used herein, it is intended that the terms "fiber optic cable" and "optical cable" include all types of fiber optic cables and optical fibers including single mode and multimode light waveguides, and including one or more bare optical fibers, loose-tube optical fibers, tight-buffered optical fibers, ribbonized optical fibers, bend-insensitive optical fibers, or any other expedient of a medium for transmitting light signals, or as otherwise may be relevant to the specific context.

Cartesian axes are shown in the figures for the sake of reference only and are not intended to be limiting with respect to direction or orientation. Additionally, for sake of reference only and not by way of limitation, the Cartesian axes shown in the figures include arrows that consistently define a particular direction with respect to each axis in all figures that depict the same object in different orientations. Throughout this disclosure, relational terms will be used by a convention in view of the Cartesian axes of the figures and the positive directions indicated by the arrows. According to the convention, relationships relative to the x-axis of any object may be expressed using terms such as left, right, to the left of, or to the right of. According to the convention, relationships relative to the *y*-axis of any object may be expressed using terms such as front, back, in front of or proximal to, or behind or distal to. According to the convention, relationships relative to the z-axis of any object may be expressed using terms such as top, bottom, above, below, over, or under. Neither the convention nor the terms used to express various relationships are intended to limit any object or component thereof to a direction or orientation in construction or in use.

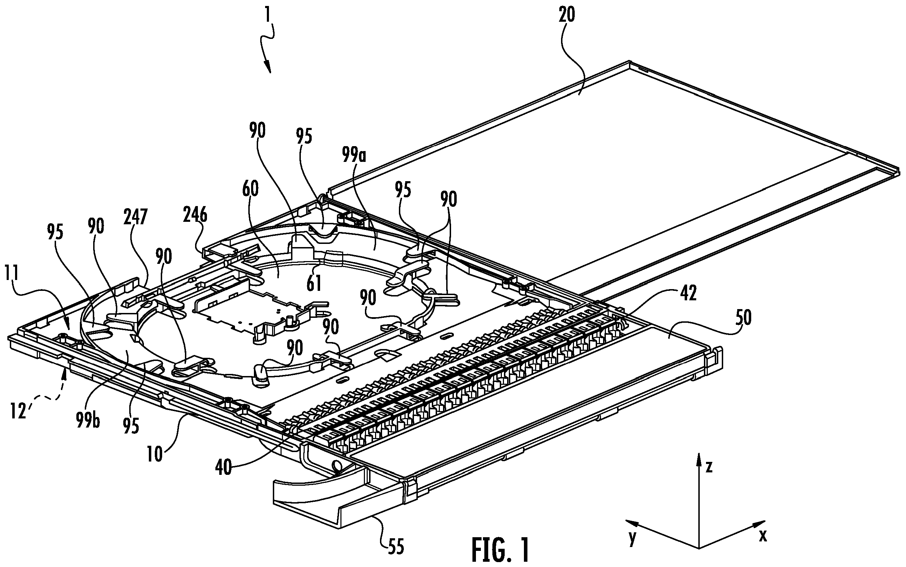

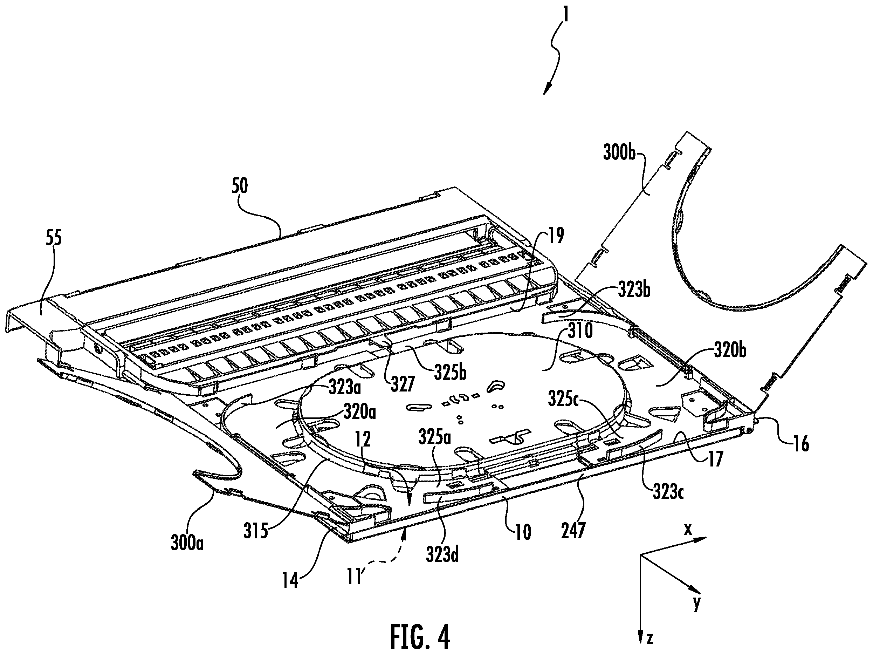

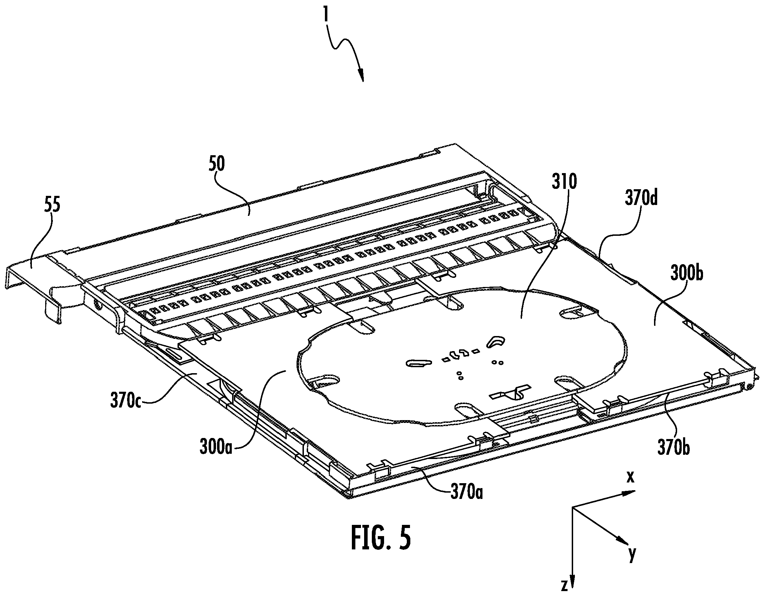

Embodiments of splice cassettes for optical cables will now be described with reference to the figures. Referring to FIG. 1 (top view), FIG. 4 (bottom view with slack covers closed), and FIG. 5 (bottom view with slack covers open), a splice cassette 1 for optical cables and optical devices may include a tray base 10 having a tray top surface 11 and a tray bottom surface 12. The tray base 10 may include a transition passage 247 through which a slack cable can be routed from the tray top surface 11 to the tray bottom surface 12. A tray-bottom substructure 310 may protrude from the tray bottom surface 12 and may have a substructure wall 315 between the tray-bottom substructure 310 and the tray bottom surface 12. A continuous slack passage may be defined outwardly on the tray-bottom surface 12 from the substructure wall 315 of the tray-bottom substructure 310. The continuous slack passage may include a first slack region 320a and a second slack region 320b on opposite sides of the tray-bottom substructure 310. The splice cassette 1 may also include a first slack cover 300a hingedly attached to a first outer edge 14 of the tray base 10. The first slack cover 300a may enclose at least a portion of the first slack region 320a in a closed position of the first slack cover 300a. The splice cassette 1 may also include a second slack cover 300b hingedly attached to a second outer edge 16 of the tray base 10. The second slack cover 300b may enclose at least a portion of the second slack region 320b in a closed position of the second slack cover 300b. The splice cassette 1 may include a slack exit 370a, 370b, 370c, 370d through which the slack cable can be passed from the first slack region 320a or the second slack region 320b out of the splice cassette 1.

In some embodiments, a tray center portion 60 may be defined on the tray top surface 11 inside a center-portion periphery 61. A plurality of tray cable retaining members such as periphery members 90 and outer members 95 may be arranged around or outside of the center-portion periphery 61 for either or both guiding and retaining optical cables around the center-portion periphery 61. Optical cables may be coupled to an adapter panel 40 having a plurality of optical connectors 42 for connecting the optical cables to at least one external device (not shown). The tray center portion 60 may be a depression in the tray top surface 11 that corresponds with the tray-bottom substructure 310 on the tray bottom surface 12.

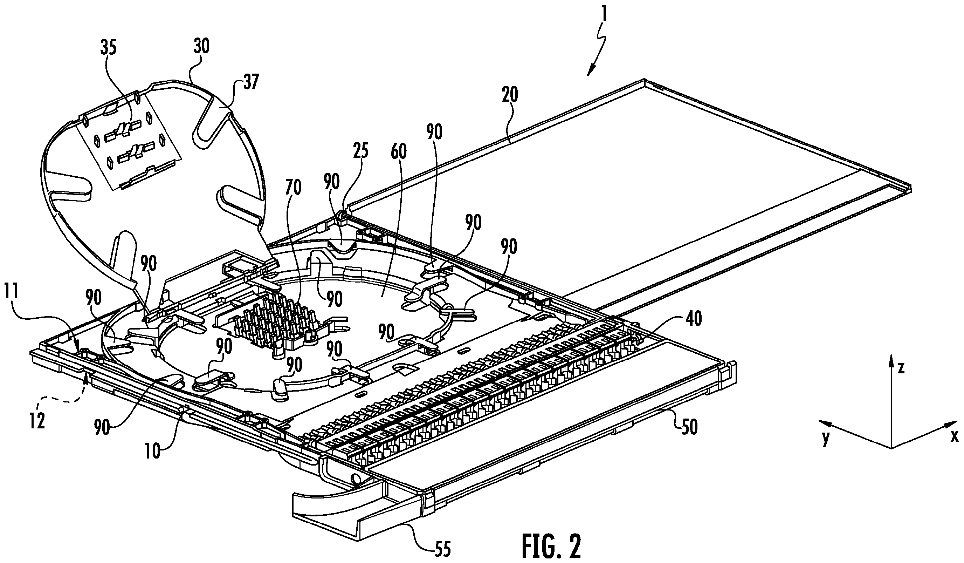

In some embodiments the splice cassette 1 may contain one or more additional features shown in the figures. For example, referring to FIG. 2, the splice cassette 1 may include an adapter panel 40 that includes a plurality of optical connectors 42 for connecting external devices (not shown) to optical cables within the splice cassette 1. As another example of an additional feature, the splice cassette 1 may include a drop handle 50 having a cable guidance end 55. The drop handle 50 may cover the adapter panel 40 when the adapter panel 40 is not in use or may protect connectors that are plugged into the adapter panel 40 when the adapter panel 40 is in use. The drop handle 50 also may include a pivot or hinge that allows the drop handle 50 to swing up and down to provide access to the adapter panel 40.

As another example of an additional feature, the splice cassette 1 may include a splice holder 70 on the tray top surface 11. Exemplary splice holders that may be suitable for use on the tray top surface 11 include the splice holders described in commonly-owned United States Patent Application Publication 2011/0268415.

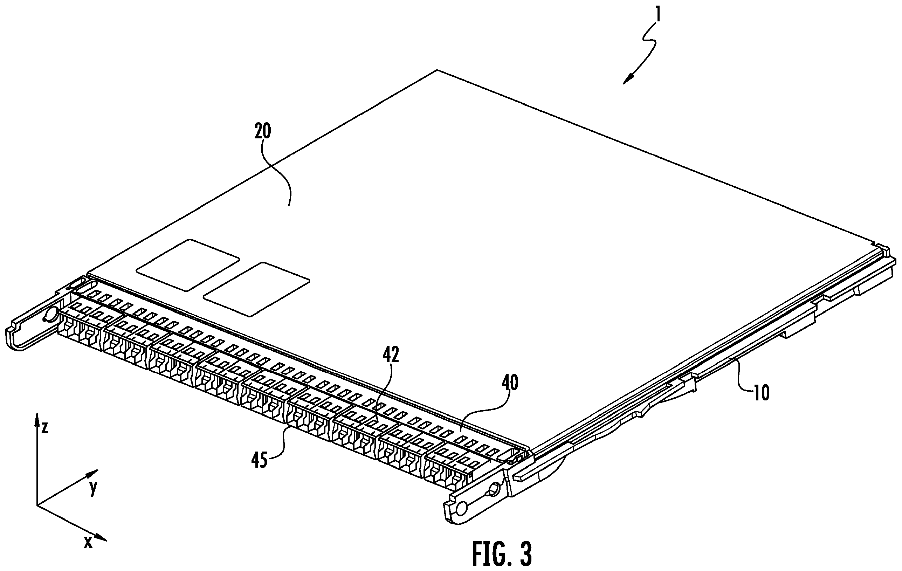

As another example of an additional feature, the splice cassette 1 may include a tray cover 20 hingedly attached to the tray base 10 on a side of the tray base 10 by a cover hinge 25, for example. Thereby, the tray cover 20 may have a cover-open position (as shown in FIGS. 1 and 2) or a cover-closed position (as shown in FIG. 3). When a device holder 30 is present, the device holder 30 may close on an axis of the tray base 10 perpendicular to the closure axis of the tray cover 20, such that the splice cassette appears as shown in FIG. 3 when both the device holder 30 and the tray cover 20 are closed. Thus, in some embodiments, when the device holder 30 is closed and the tray cover 20 is also closed, the device holder 30 is interposed between the tray top surface 11 and the tray cover 20. In some embodiments, the tray cover 20 may be made of a transparent or translucent material that enables a technician to view connections and devices on the tray base 10 through the tray cover 20. Additionally, the device holder 30 may also be made of a transparent or translucent material that enables a technician to view connections and devices on the tray base 10 through the device holder 30.

Referring to FIGS. 1 and 4, the splice cassette 1 may include a tray base 10 having a tray top surface 11. The tray base 10 may be made of a rigid material such as a plastic or polymer and may be made by any suitable technique such as molding or pressing, for example. The tray base 10 may include a tray center portion 60 defined within a center-portion periphery 61. In some embodiments, the tray center portion 60 may be a depression in the center of the tray base 10, such that the center-portion periphery 61 is defined by outer walls of the depression. In other embodiments, the tray top surface 11, including the tray center portion 60, may be substantially planar, such that the center-portion periphery 61 may be defined by one or more raised features connected to the tray top surface 11.

The tray center portion 60 may be disposed within a plurality of tray cable retaining members such as periphery members 90 arranged around the center-portion periphery 61. The plurality of tray cable retaining members may secure optical cables running within the tray center portion 60, optical cables running within a cable track 99a, 99b outside the tray center portion 60, or both. Cables running within the cable track 99a, 99b may also be secured by outer members 95. The periphery members 90 and the outer members 95 may be any suitable structure that guides, catches, or secures optical cables, or that facilitates winding or wrapping of the optical cables along a predetermined pathway such as within the cable track 99a, 99b.

In embodiments in which a device holder 30 is present, the device holder 30 may include at least one device securing member 35 configured to secure one or more optical devices (not shown) such as, but not limited to, a fan-out connector, a multiplexer, or an optical splitter. Thus, when the device holder 30 is closed, the optical device or optical devices (not shown) secured in the device holder 30 may fit into the tray center portion 60 and overlie the tray top surface 11. Additionally, the device holder 30 may include holder cable guidance members 37 configured to guide optical cables from the tray base 10 to the optical device (not shown) secured in the at least one device securing member 35.

Referring to FIGS. 1 and 4, the tray base 10 may include a transition passage 247 through which a slack cable can be routed from the tray top surface 11 to the tray bottom surface 12. The transition passage 247 may be any feature such as a notch or a hole in the tray base 10 configured such that slack cable that may be routed through the cable track 99a, 99b can be easily directed from the tray top surface 11 to the tray bottom surface 12. The tray bottom surface 12 may contain features that allow the tray bottom surface 12 to be used to store a significant amount of slack cable that may be used by a technician during installation, repair, or replacement of the splice cassette 1. Features of the tray bottom surface 12 will now be described in greater detail.

Referring to FIG. 4, a tray-bottom substructure 310 may protrude from the tray bottom surface 12. The tray-bottom substructure may be defined by a substructure wall 315 between the tray-bottom substructure 310 and the tray bottom surface 12. In some embodiments, the tray-bottom substructure 310 may be a protrusion that corresponds to a tray center portion 60 on the tray top surface 11 configured as a depression in the tray-top surface.

A continuous slack passage may be defined outwardly on the tray-bottom surface 12 from the substructure wall 315 of the tray-bottom substructure 310 toward outer edges 14, 16, 17, 19 of the tray-bottom surface 12. The continuous slack passage may include a first slack region 320a and a second slack region 320b on opposite sides of the tray-bottom substructure 310. The continuous slack passage may also include connector passages 325a, 325b, 325c through which cables may be routed from the first slack region 320a to the second slack region 320b or from the second slack region 320b to the first slack region 320a. Guidance of optical cables around the continuous slack passage may be facilitated by slack-passage guidance members 323a, 323b, 323c, 323d positioned at bends of the continuous slack passage. Additional guidance and retaining of optical cables may be provided by retaining members such as slack-passage overhead retaining member 327.

Referring to FIGS. 4 and 5, the splice cassette 1 may also include a first slack cover 300a hingedly attached to a first outer edge 14 of the tray base 10. The first slack cover 300a may enclose at least a portion of the first slack region 320a in a closed position of the first slack cover 300a. The splice cassette 1 may also include a second slack cover 300b hingedly attached to a second outer edge 16 of the tray base 10. The second slack cover 300b may enclose at least a portion of the second slack region 320b in a closed position of the second slack cover 300b. The first slack cover 300a and the second slack cover 300b may have a side profile that matches the shape or curvature of the tray-bottom substructure 310. Additional features of the slack covers 300a, 300b will now be described.

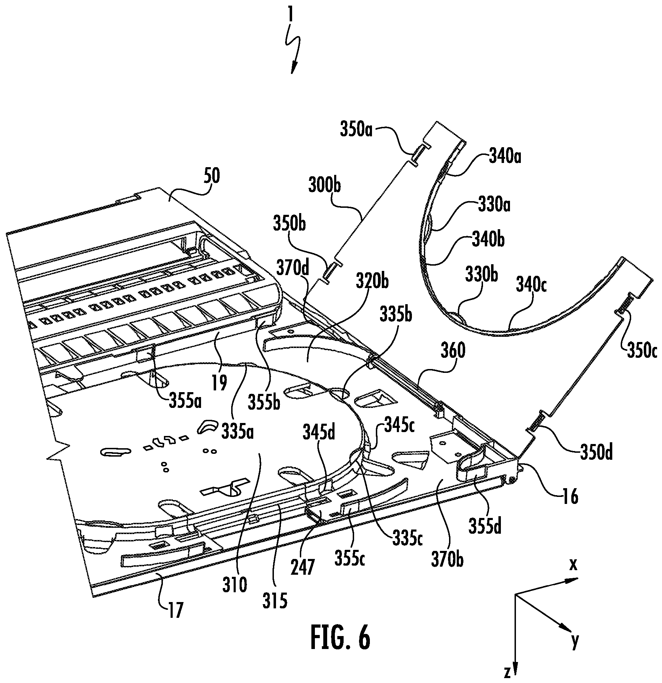

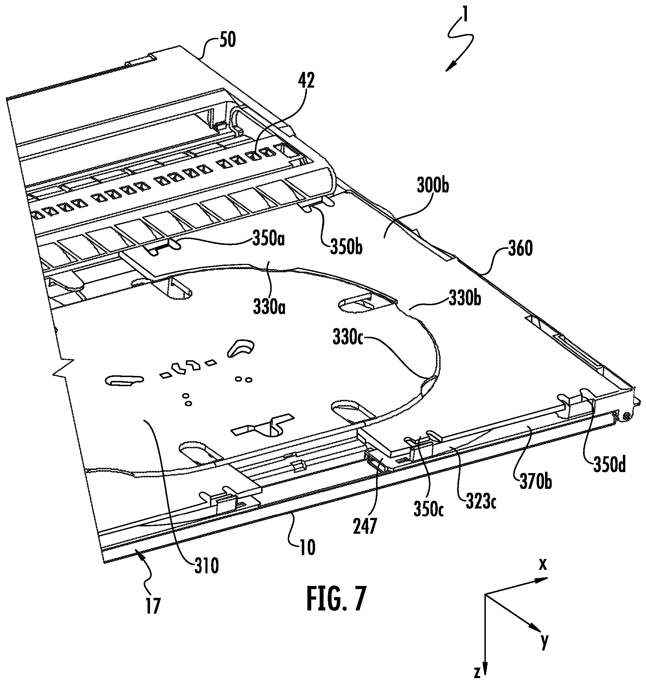

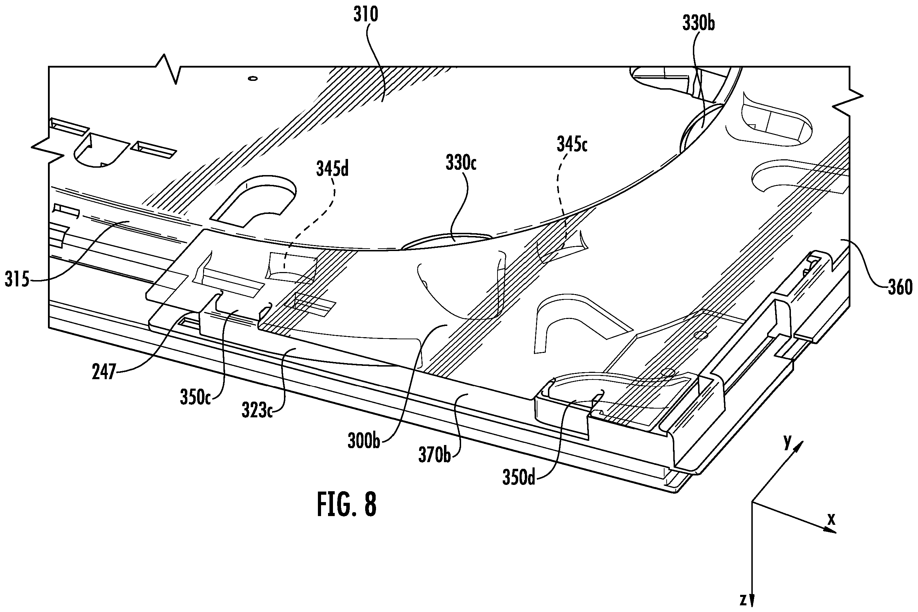

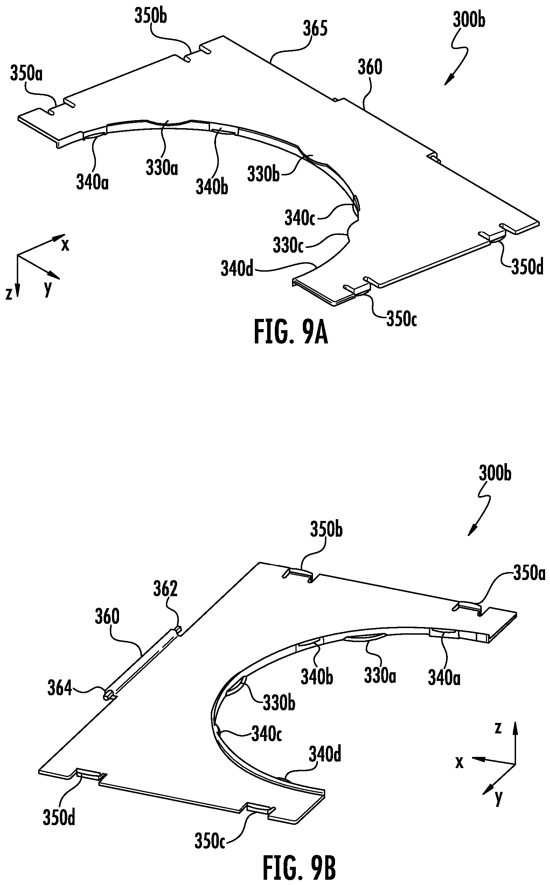

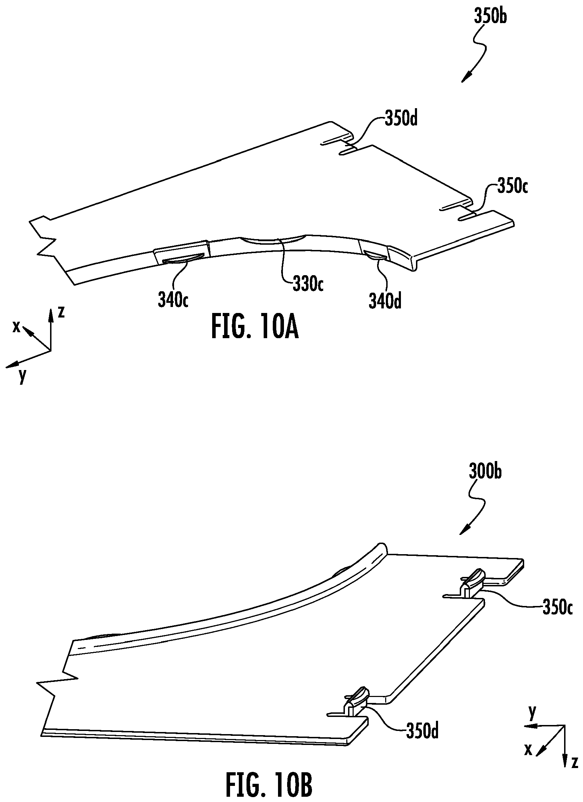

Referring to FIGS. 6-8, 9A, 9B, 10A, and 10B, the second slack cover 300b is shown as exemplary of features that may be present on either or both of the first slack cover 300a or the second slack cover 300b. The second slack cover 300b is shown in an open position in FIG. 6 and in a closed position in FIG. 7. The closed position is further illustrated in the detail view of FIG. 8. The second slack cover 300b may be hingedly attached to the second outer edge 16 of the tray base 10 by any suitable hinging mechanism. For example, the second slack cover 300b maybe hingedly attached to the second outer edge 16 of the tray base 10 by a hinge bar 360. As shown in FIG. 9B, an exemplary embodiment of the hinge bar 360 may include opposing hinge pins 362, 364 that may fit into a suitable hole on the tray base 10, whereby the second slack cover 300b is able to swing toward or away from the tray-bottom surface 12 to cover or expose the second slack region 320b.

The second slack cover 300b may include corner securing members 350a, 350b, 350c, 350d that hold the second slack cover 300b in a closed position when the second slack cover 300b is intended to remain closed, such as during storage of the splice cassette 1. Each of the corner securing members 350a, 350b, 350c, 350d may be configured as snap hooks having a resilience that enable the snap hooks to lock into the tray base 10 when the second slack cover 300b is closed. The corner securing members 350a, 350b, 350c, 350d may lock into corresponding cover tabs 355a, 355b, 355c, 355d on the tray base 10.

The second slack cover 300b may also include inner nibs 340a, 340b, 340c, 340d that lock into corresponding nib receptors 345a, 345b, 345c, 345d in the substructure wall 315 that defines the tray-bottom substructure 310. The inner nibs 340a, 340b, 340c, 340d may provide additional securing strength against outwardly directed forces applied by slack cables in the second slack region 320b against the second slack cover 300b.

The second slack cover 300b may also include alignment protrusions 330a, 330b, 330c, that rest in corresponding alignment dimples 335a, 335b, 335c on the tray-bottom substructure 310. The alignment protrusions 330a, 330b, 330c may aid a technician to identify that the second slack cover 300b is aligned and firmly locked in its closed position, so as to avoid an unexpected opening of the second slack cover 300b and spilling out of slack cables when the splice cassette 1 is installed.

Referring to FIGS. 4-8, the splice cassette 1 may include a slack exit 370a, 370b, 370c, 370d through which the slack cable can be passed from the first slack region 320a or the second slack region 320b out of the splice cassette 1. In some embodiments, the slack exit 370a, 370b, 370c, 370d may be underneath the first slack cover 300a or the second slack cover 300b. As shown in the embodiment of FIGS. 7 and 8 using the second slack cover 300b as illustrative only, the slack exit 370b may be disposed between corner securing members 350c, 350d of the second slack cover 300b, such that the slack-passage guidance member 323c may facilitate guidance of slack cable out of the slack exit 370b. In some embodiments, the slack exit 370a, 370b maybe disposed adjacent to a distal outer edge 17 of the tray base 10 opposite the adapter panel 40. In some embodiments, the slack exit 370c, 370d may be disposed at a lateral outer edge of the tray base 10 such as at first outer edge 14 or second outer edge 16, for example, adjacent to the hinge bar 360.

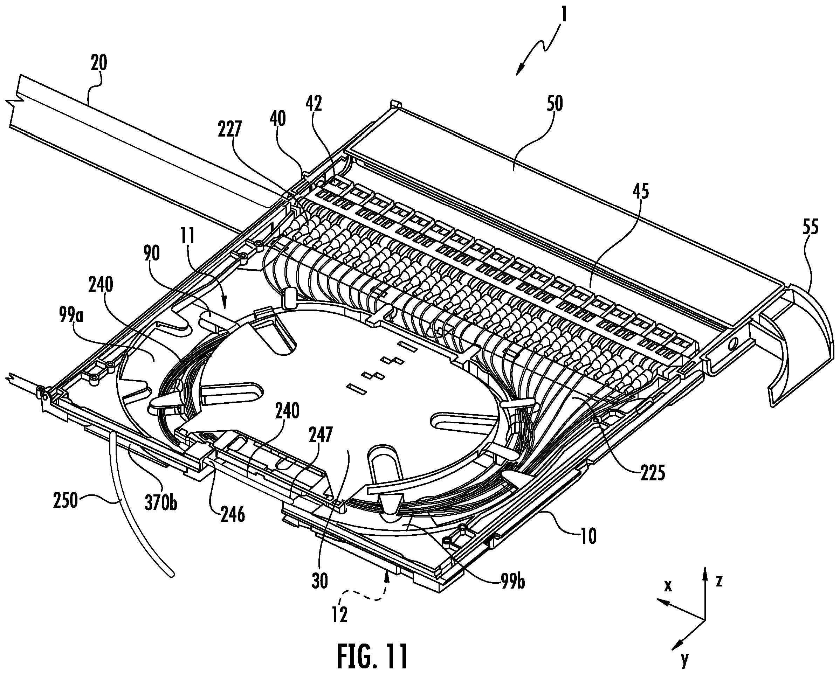

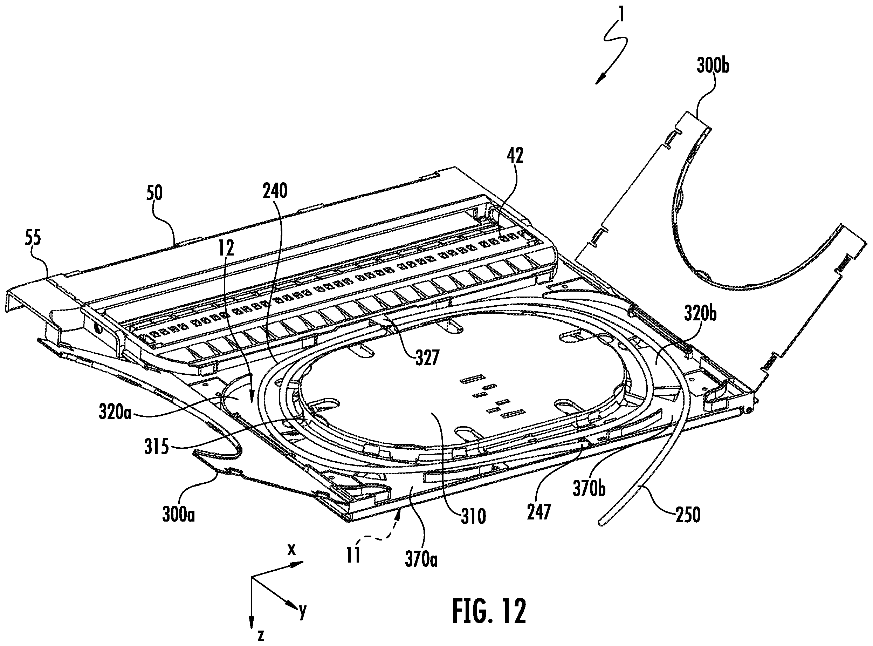

Having described various features of the splice cassette 1 according to various embodiments, a non-limiting exemplary embodiment of cable routing in the splice cassette 1 according to some of the embodiments described above will now be described with reference to FIGS. 11 and 12, of which, FIG. 11 is a top view of the splice cassette 1 loaded with optical cables and connections and FIG. 12 is a bottom view of the splice cassette 1 of FIG. 11.

Referring to FIG. 11, the splice cassette 1 may include the tray base 10 having the tray top surface 11 and the tray bottom surface 12. The splice cassettes may be loaded with a plurality of optical cables 225 coupled to an adapter panel 40 having a plurality of adapters 42 with optical connector 227 inserted therein for connecting the plurality of optical cables 225 to at least one external device (not shown) through the adapters 42. At least a portion of the optical cables 225 may be jacketed or bundled together as a slack cable 240. A tray center portion 60 (see FIGS. 1 and 2) may be defined on the tray top surface 11 inside a center-portion periphery 61. In FIG. 11, the tray center portion 60 is obscured underneath the device holder 30 in its closed position. In some embodiments, the device holder 30 is present, whereas in other embodiments no device holder may be present.

A plurality of tray cable retaining members 90 may be arranged around the center-portion periphery 61. The plurality of tray cable retaining members may retain and guide the optical cables 225 or the slack cable 240 around the center-portion periphery 61. The tray base 10 includes the transition passage 247, through which the slack cable may be routed from the tray top surface 11 to the tray bottom surface 12. The tray base may also include a passage alignment member 246 through which the slack cable 240 may be routed to align the slack cable with the transition passage 247. In FIG. 11, an exit strand 250 of slack cable is visible protruding from the slack exit 270b, where the slack cable 240 arrives after being routed around the tray-bottom surface 12, as will now be described.

Referring to FIG.12, the tray-bottom substructure 310 protrudes from the tray bottom surface 12 below the tray center portion 60 of the tray top surface 11. Thereby, a continuous slack passage is defined outwardly on the tray bottom surface 12 from a substructure wall 315 of the tray-bottom substructure 310. The continuous slack passage includes the first slack region 320a and the second slack region 320b on opposite sides of the tray-bottom substructure 310. The slack cable 240 may be routed at least once around the continuous slack passage. For example, as shown in FIG. 12, the slack cable 240 may be routed twice around the continuous slack passage. It should be understood that the slack cable 240 may be routed around the continuous slack passage as many times as desired, depending on the length and thickness of the slack cable 240, and depending on the available volume of the continuous slack passage when the first slack cover 300a and the second slack cover 300b are closed.

The first slack cover 300a and the second slack cover 300b may be hingedly attached to opposite outer edges of the tray base 10. The first slack cover 300a encloses at least a portion of the first slack region 320a when closed, and the second slack cover 300b may enclose at least a portion of the second slack region 320b when closed. The splice cassette includes the slack exit 370b, 370d, through which an exit strand 250 of the slack cable 240 passes from the second slack region 320b (as shown) or the first slack region 320a out of the splice cassette 1. The exit strand 250 may be connected to an external device (not shown) or may hang free, depending on the application in which the splice cassette 1 is being used. If the exit strand 250 is connected to an external device, for example, then by opening the first slack cover 300a and the second slack cover 300b, a technician can easily release the slack cable 240 in the slack regions 320a, 320b to provide freedom to move the splice cassette 1 out of a tight location while maintenance is being performed. Likewise, when maintenance or installation is completed, the slack cable 240 may be wrapped or rewrapped around the continuous slack passage and the slack covers 300a, 300b maybe closed to secure the slack cable 240 within the slack regions 320a, 320b.

Thus, embodiments of splice cassettes for optical cables have been described. The splice cassettes may include a tray base having a tray-top surface in which optical connections are made and a tray-bottom surface in which slack cable may be retained within slack regions. Thereby, ease and efficiency of maintenance or installation operations for optical-fiber networking equipment may be facilitated.

Unless otherwise expressly stated, it is in no way intended that any method set forth herein be construed as requiring that its steps be performed in a specific order.

It will be apparent to those skilled in the art that various modifications and variations can be made without departing from the scope of the disclosure.

## Claims

1. A splice cassette (1) for optical cables (225), the splice cassette (1) comprising:
a tray base (10) having a tray top surface (11) and a tray bottom surface (12);
a transition passage (247) through which a slack cable (240) can be routed from the tray top surface (11) to the tray bottom surface (12);
a tray-bottom substructure (310) protruding from the tray bottom surface (12);
a continuous slack passage defined outwardly on the tray-bottom surface (12) from a substructure wall (315) of the tray-bottom substructure (310), the continuous slack passage comprising a first slack region (320a) and a second slack region (320b) on opposite sides of the tray-bottom substructure (310);
a slack exit (370a, 370b, 370c, 370d) through which the slack cable (240) can be passed from the first slack region (320a) or the second slack region (320b) out of the splice cassette (1);
**characterized by**
a first slack cover (300a) hingedly attached to a first outer edge (14) of the tray base (10), the first slack cover (300a) enclosing at least a portion of the first slack region (320a) in a closed position of the first slack cover (300a);
a second slack cover (300b) hingedly attached to a second outer edge (16) of the tray base (10), the second slack cover (300b) enclosing at least a portion of the second slack region (320b) in a closed position of the second slack cover (300b).

2. The splice cassette (1) of claim 1, wherein the first slack cover (300a) and the second slack cover (300b) each comprise securing members (350a, 350b, 350c, 350d) that hold the first slack cover (300a) and the second slack cover (300b) closed.

3. The splice cassette (1) of claim 2, wherein the securing members comprise slack cover latches.

4. The splice cassette (1) of claim 3, wherein the slack cover latches are disposed adjacent to each of four corners on both the first slack cover (300a) and the second slack cover (300b).

5. The splice cassette (1) of any of claims 2-4, wherein the securing members (350a, 350b, 350c, 350d) comprise at least one substructure securing member (350a, 350b, 350c, 350d) that engages the tray-bottom substructure (310).

6. The splice cassette (1) of any of claims 1-5, wherein the tray-bottom substructure (310) is shaped as a rounded rectangle, such that the continuous slack passage comprises two opposing semicircular passage portions connected by two substantially straight passage portions.

7. The splice cassette (1) of claim 6, wherein the two opposing semicircular passage portions comprise a first semicircular passage portion and a second semicircular passage portion, the first slack cover (300a) encloses the continuous slack passage in the first semicircular passage portion, and the second slack cover (300b) encloses the continuous slack passage in the second semicircular passage portion.

8. The splice cassette (1) of any of claims 1-7, wherein the first slack cover (300a) comprises opposing hinge pins (362, 364) that attach the first slack cover (300a) to the first outer edge (14) and the second slack cover (300b) comprises opposing hinge pins (362, 364) that attach the second slack cover (300b) to the second outer edge (16).

9. The splice cassette (1) of any of claims 1-8, further comprising a tray cover (20) hingedly attached to the tray base (10) and having a cover-open position and a cover-closed position, wherein when the tray cover (20) is in the cover-closed position the tray cover (20) overlies the tray top surface (11).

10. The splice cassette (1) of any of claims 1-9, further comprising a device holder (30) removably and hingedly attached to the tray base (10) and having a holder-closed position and a holder-open position, the device holder (30) comprising at least one device securing member (35) configured to secure an optical device to the device holder (30), wherein when the device holder (30) is in the holder-closed position and an optical device is secured in the at least one device securing member (35) the optical device overlies the tray center portion.

## Patentansprüche

1. Spleißkassette (1) für Lichtleiterkabel (225), wobei die Spleißkassette (1) Folgendes aufweist:
eine Trägerbasis (10), die eine Trägerdeckfläche (11) und eine Trägerbodenfläche (12) aufweist;
einen Übergangsdurchgang (247), durch den ein Überlängenkabel (240) von der Trägerdeckfläche (11) zur Trägerbodenfläche (12) geführt werden kann;
eine Trägerbodenstruktur (310), die von der Trägerbodenfläche (12) vorsteht;
einen durchgehenden Überlängendurchgang, der außerhalb auf der Trägerbodenfläche (12) vom einer Unterstrukturwand (315) der Trägerbodenunterstruktur (310) definiert ist, wobei der durchgehende Überlängendurchgang einen ersten Überlängenbereich (320a) und einen zweiten Überlängenbereich (320b) auf entgegengesetzten Seiten der Trägerbodenunterstruktur (310) aufweist;
einen Überlängenausgang (370a, 370b, 370c, 370d), durch den das Überlängenkabel (240) vom ersten Überlängenbereich (320a) oder vom zweiten Überlängenbereich (320b) aus der Spleißkassette (1) verlaufen kann;
**gekennzeichnet durch**
eine erste Überlängenabdeckung (300a), die gelenkig an einer ersten Außenkante (14) der Trägerbasis (10) befestigt ist, wobei die erste Überlängenabdeckung (300a) in einer geschlossenen Stellung der ersten Überlängenabdeckung (300a) zumindest einen Abschnitt des ersten Überlängenbereichs (320a) umschließt;
eine zweite Überlängenabdeckung (300b), die gelenkig an einer zweiten Außenkante (16) der Trägerbasis (10) befestigt ist, wobei die zweite Überlängenabdeckung (300b) in einer geschlossenen Stellung der zweiten Überlängenabdeckung (300b) zumindest einen Abschnitt des zweiten Überlängenbereichs (320b) umschließt.

2. Spleißkassette (1) nach Anspruch 1, wobei die erste Überlängenabdeckung (300a) und die zweite Überlängenabdeckung (300b) jeweils Befestigungselemente (350a, 350b, 350c, 350d) aufweisen, die die erste Überlängenabdeckung (300a) und die zweite Überlängenabdeckung (300b) geschlossen halten.

3. Spleißkassette (1) nach Anspruch 2, wobei die Befestigungselemente Überlängenabdeckungsnasen aufweisen.

4. Spleißkassette (1) nach Anspruch 3, wobei die Überlängenabdeckungsnasen an jede der vier Ecken sowohl der ersten Überlängenabdeckung (300a) als auch der zweiten Überlängenabdeckung (300b) angrenzend angeordnet sind.

5. Spleißkassette (1) nach einem der Ansprüche 2-4, wobei die Befestigungselemente (350a, 350b, 350c, 350d) mindestens ein Unterstrukturbefestigungselement (350a, 350b, 350c, 350d) aufweisen, das in die Trägerbodenunterstruktur (310) eingreift.

6. Spleißkassette (1) nach einem der Ansprüche 1-5, wobei die Trägerbodenteilstruktur (310) als runde Aufnahme geformt ist, sodass der durchgehende Überlängendurchgang zwei entgegengesetzte halbkreisförmige Durchgangsabschnitte aufweist, die durch zwei im Wesentlichen gerade Durchgangsabschnitte verbunden sind.

7. Spleißkassette (1) nach Anspruch 6, wobei die zwei entgegengesetzten halbkreisförmigen Durchgangsabschnitte einen ersten halbkreisförmigen Durchgangsabschnitt und einen zweiten halbkreisförmigen Durchgangsabschnitt aufweisen, wobei die erste Überlängenabdeckung (300a) den durchgehenden Überlängendurchgang im ersten halbkreisförmigen Durchgangsabschnitt umschließt, und die zweite Überlängenabdeckung (300b) den durchgehenden Überlängendurchgang im zweiten halbkreisförmigen Durchgangsabschnitt umschließt.

8. Spleißkassette (1) nach einem der Ansprüche 1-7, wobei die erste Überlängenabdeckung (300a) einander entgegengesetzte Scharnierstifte (362, 364) aufweist, die die erste Überlängenabdeckung (300a) an der ersten Außenkante (14) befestigen, und wobei die zweite Überlängenabdeckung (300b) einander entgegengesetzte Scharnierstifte (362, 364) aufweist, die die zweite Überlängenabdeckung (300b) an der zweiten Außenkante (16) befestigen.

9. Spleißkassette (1) nach einem der Ansprüche 1-8, ferner eine Trägerabdeckung (20) aufweisend, die gelenkig an der Trägerbasis (10) befestigt ist und eine geöffnete Abdeckungsstellung und eine geschlossene Abdeckungsstellung aufweist, wobei, wenn sich die Trägerabdeckung (20) in der geschlossenen Abdeckungsstellung befindet, die Trägerabdeckung (20) auf der Trägerdeckfläche (11) liegt.

10. Spleißkassette (1) nach einem der Ansprüche 1-9, ferner eine Vorrichtungshalterung (30) aufweisend, die abnehmbar und gelenkig an der Trägerbasis (10) befestigt ist und eine geschlossene Halterungsstellung und eine geöffnete Halterungsstellung aufweist, wobei die Vorrichtungshalterung (30) mindestens ein Vorrichtungsbefestigungselement (35) aufweist, das dazu ausgelegt ist, eine optische Vorrichtung an der Vorrichtungshalterung (30) zu befestigen, wobei, wenn sich die Vorrichtungshalterung (30) in der geschlossenen Halterungsstellung befindet und eine optische Vorrichtung in dem mindestens einen Vorrichtungsbefestigungselement (35) befestigt ist, die optische Vorrichtung auf dem mittleren Trägerabschnitt liegt.

## Revendications

1. Cassette d'épissure (1) pour câbles optiques (225), la cassette d'épissure (1) comprenant :
une base (10) de plateau pourvue d'une surface de dessus (11) de plateau et d'une surface de dessous (12) de plateau ;
un passage de transition (247) au travers duquel un câble mou (240) peut être acheminé depuis la surface de dessus (11) de plateau jusqu'à la surface de dessous (12) de plateau ;
une sous-structure (310) de dessous de plateau faisant saillie de la surface de dessous (12) de plateau ;
un passage de mou continu défini vers l'extérieur sur la surface de dessous (12) de plateau à partir d'une paroi (315) de sous-structure de la sous-structure (310) de dessous de plateau, le passage de mou continu comprenant une première région de mou (320a) et une deuxième région de mou (320b) de côtés opposés de la sous-structure (310) de dessous de plateau ;
une sortie de mou (370a, 370b, 370c, 370d) au travers de laquelle le câble mou (240) peut passer depuis la première région de mou (320a) ou la deuxième région de mou (320b) hors de la cassette d'épissure (1) ;
**caractérisée par**
un premier couvercle de mou (300a) attaché par charnière à un premier bord extérieur (14) de la base (10) de plateau, le premier couvercle de mou (300a) renfermant au moins une partie de la première région de mou (320a) dans une position fermée du premier couvercle de mou (300a) ;
un deuxième couvercle de mou (300b) attaché par charnière à un deuxième bord extérieur (16) de la base (10) de plateau, le deuxième couvercle de mou (300b) renfermant au moins une partie de la deuxième région de mou (320b) dans une position fermée du deuxième couvercle de mou (300b).

2. Cassette d'épissure (1) selon la revendication 1, dans laquelle le premier couvercle de mou (300a) et le deuxième couvercle de mou (300b) comprennent chacun des éléments d'assujettissement (350a, 350b, 350c, 350d) qui maintiennent le premier couvercle de mou (300a) et le deuxième couvercle de mou (300b) fermés.

3. Cassette d'épissure (1) selon la revendication 2, dans laquelle les éléments d'assujettissement comprennent des verrous de couvercles de mou.

4. Cassette d'épissure (1) selon la revendication 3, dans laquelle les verrous de couvercles de mou sont placés adjacents à chacun de quatre coins sur le premier couvercle de mou (300a) comme sur le deuxième couvercle de mou (300b).

5. Cassette d'épissure (1) selon l'une quelconque des revendications 2 à 4, dans laquelle les éléments d'assujettissement (350a, 350b, 350c, 350d) comprennent au moins un élément d'assujettissement (350a, 350b, 350c, 350d) de sous-structure qui vient en prise avec la sous-structure (310) de dessous de plateau.

6. Cassette d'épissure (1) selon l'une quelconque des revendications 1 à 5, dans laquelle la sous-structure (310) de dessous de plateau prend la forme d'un rectangle arrondi, de sorte que le passage de mou continu comprend deux parties de passage semi-circulaires opposées reliées par deux parties de passage sensiblement droites.

7. Cassette d'épissure (1) selon la revendication 6, dans laquelle les deux parties de passage semi-circulaires opposées comprennent une première partie de passage semi-circulaire et une deuxième partie de passage semi-circulaire, le premier couvercle de mou (300a) renferme le passage de mou continu dans la première partie de passage semi-circulaire et le deuxième couvercle de mou (300b) renferme le passage de mou continu dans la deuxième partie de passage semi-circulaire.

8. Cassette d'épissure (1) selon l'une quelconque des revendications 1 à 7, dans laquelle le premier couvercle de mou (300a) comprend des goujons de charnière opposés (362, 364) qui attachent le premier couvercle de mou (300a) au premier bord extérieur (14) et le deuxième couvercle de mou (300b) comprend des goujons de charnière opposés (362, 364) qui attachent le deuxième couvercle de mou (300b) au deuxième bord extérieur (16).

9. Cassette d'épissure (1) selon l'une quelconque des revendications 1 à 8, comprenant en outre un couvercle (20) de plateau attaché par charnière à la base (10) de plateau et ayant une position ouverte de couvercle et une position fermée de couvercle ; lorsque le couvercle (20) de plateau occupe la position fermée de couvercle, le couvercle (20) de plateau recouvrant la surface de dessus (11) de plateau.

10. Cassette d'épissure (1) selon l'une quelconque des revendications 1 à 9, comprenant en outre un porte-dispositif (30) attaché de façon amovible et par charnière à la base (10) de plateau et ayant une position fermée de porte-dispositif et une position ouverte de porte-dispositif, le porte-dispositif (30) comprenant au moins un élément d'assujettissement de dispositif (35) configuré pour assujettir un dispositif optique au porte-dispositif (30) ; lorsque le porte-dispositif (30) occupe la position fermée de porte-dispositif et un dispositif optique est assujetti dans l'au moins un élément d'assujettissement de dispositif (35), le dispositif optique recouvrant la partie centrale de plateau.
